# EUROPÄISCHE PATENTSCHRIFT

(11) **EP 2 499 390 B1**
(45) Veröffentlichungstag und Bekanntmachung des Hinweises auf die Patenterteilung: **13.01.2016**
(21) Anmeldenummer: 10801127.1
(22) Anmeldetag: 13.12.2010
(51) Int. Cl.: F16D 3/46

(54) **GELENKEINRICHTUNG**
HINGE DEVICE
DISPOSITIF D'ARTICULATION

(30) Priorität: 16.12.2009 DE 102009058664
(43) Veröffentlichungstag der Anmeldung: 19.09.2012
(73) Patentinhaber: Festo AG & Co. KG, 73734 Esslingen (DE)
(72) Erfinder: KAMINSKI, Ruwen, 70190 Stuttgart (DE); NEUMANN, Rüdiger, 73760 Ostfildern (DE); HILDEBRANDT, Alexander, 72669 Unterensingen (DE)
(74) Vertreter: Patentanwälte Magenbauer & Kollegen Partnerschaft mbB
(86) Internationale Anmeldenummer: PCT/EP2010/007573
(87) Internationale Veröffentlichungsnummer: WO 2011/082763

(56) Entgegenhaltungen:
- DE-C- 875 596
- DE-U1- 20 318 737
- FR-A- 1 352 922
- US-A- 1 224 286
- US-A- 1 509 487

## Beschreibung

Die Erfindung betrifft eine Gelenkeinrichtung zur schwenkbeweglichen Verbindung benachbarter Bauteile, mit einem ersten Gelenkteil und einem Bauteil, das einstückig am Gelenkteil angeformt ist und mit einem zweiten Gelenkteil und einem Bauteil, das einstückig am Gelenkteil angeformt ist sowie mit einem Kopplungselement, das mit beiden Gelenkteilen jeweils derart schwenkbeweglich verbunden ist, wobei eine Schwenkachse des ersten Gelenkteils senkrecht zu einer Schwenkachse des zweiten Gelenkteils ausgerichtet ist, wobei das Kopplungselement zwei in senkrecht zueinander ausgerichteten Ebenen ausgebildete, ringförmig umlaufende Führungsnuten aufweist, die jeweils für einen Eingriff eines Gelenkteils ausgebildet sind und wobei das Gelenkteil einstückig ausgebildet ist.

Eine aus dem Stand der Technik bekannte, als Kreuzgelenk oder Kardangelenk bezeichnete Gelenkeinrichtung umfasst ein zentral angeordnetes Gelenkkreuz mit kreuzförmig abragenden Gelenkzapfen, an denen zwei in einander entgegengesetzten Richtungen abragende Gelenkgabeln jeweils schwenkbeweglich befestigt sind. Dabei ist eine erste Gelenkgabel mittels eines ersten Gelenkzapfenpaars um eine erste Schwenkachse relativ zum Gelenkkreuz beweglich befestigt. Eine zweite Gelenkgabel ist mittels eines zweiten Gelenkzapfenpaars um eine zweite Schwenkachse beweglich am Gelenkkreuz befestigt. Die erste und die zweite Schwenkachse sind senkrecht zueinander ausgerichtet. Mit der bekannten Gelenkeinrichtung können Bauteile schwenkbeweglich zueinander gelagert werden, wobei eine Drehmomentübertragung zwischen den Gelenkteilen um eine im Wesentlichen senkrecht zu den beiden Schwenkachsen ausgerichtete Längsachse von einem Bauteil auf das andere Bauteil erfolgen kann.

Die US 1,509,487 offenbart ein Kreuzgelenk, bei dem die beiden Gelenkteile eine Kugel umfassen, die als Zentrierelement zwischen den beiden Gelenkteilen eingesetzt wird und die ihrerseits von Wandabschnitten eingefasst ist, an denen die Gelenkteile schwenkbeweglich gelagert sind.

Aus der US 1,224,286 ist ein Kreuzgelenk bekannt, bei dem zwei Gelenkteile jeweils in Nuten einer zentral angeordneten Kugel eingreifen, wobei die beiden Gelenkteile jeweils zweiteilig ausgebildet sind und somit an der Kugel anbringbar sind.

Aus der FR 1,352,922 ist ein Kreuzgelenk bekannt, bei dem ein zweiteilig ausgebildetes Gelenkteil in eine mit Nuten versehenen Kugel eingreift, wobei das.Gelenkteil einen U-förmigen Abschnitt aufweist, der um die Kugel gelegt werden kann um dann am zweiten Gelenkteil verriegelt zu werden.

Die DE 203 18 737 U1 offenbart eine Gelenkwelle, bei der Gelenkgabeln jeweils eine mit Nuten versehene Kugel teilweise umfassen und wobei die Nuten einen trapezförmigen Querschnitt aufweisen.

Aus der DE 875 596 ist ein Kugelgelenk zur Übertragung von Drehbewegungen bekannt, bei dem in einer Kugel zwei sich unter einem Winkel von 90 Grad schneidende Ringnuten ausgebildet sind und gabelförmige ausgebildete Wellenenden in die jeweiligen Ringnuten eingreifen, wobei die Wellenenden jeweils elastisch auf die Kugel aufgeschnappt werden.

Die Aufgabe der Erfindung besteht darin, eine Gelenkeinrichtung mit einer hohen Stabilität bei einfacher Aufbauweise zur Verfügung zu stellen.

Diese Aufgabe wird für eine Gelenkeinrichtung der eingangs genannten Art mit den Merkmalen des Anspruchs 1 gelöst. Dabei ist vorgesehen, dass die Gelenkteile jeweils eine an die Führungsnut angepasste Ausnehmung aufweisen, die derart ausgebildet ist, dass das jeweilige Gelenkteil das Kopplungselement im Bereich der Führungsnut vollständig umgreift.

Hierdurch entfallen Schnittstellen innerhalb der jeweiligen Bauteile, die typischerweise die bei Kräfte- und/oder Drehmomentbeaufschlagung jeweils schwächsten Bereiche darstellen. Somit kann die Gelenkeinrichtung im Hinblick auf hohe mechanische Belastbarkeit und geringes Gewicht optimiert werden. Dies kann beispielsweise dadurch erreicht werden, dass die Bauteile in gleicher Weise wie die Gelenkteile in einem generativen Herstellungsprozess hergestellt werden.

Ferner ist vorgesehen, dass das Kopplungselement zwei in senkrecht zueinander ausgerichteten Ebenen ausgebildete, ringförmig umlaufende Führungsnuten aufweist, die jeweils für einen Eingriff eines Gelenkteils ausgebildet sind. Die Funktion der Führungsnuten besteht darin, jeweils eine schwenkbewegliche Festlegung der Gelenkteile an dem Kopplungselement zu gewährleisten. Der Nutgrund und die Seitenwände der Führungsnuten dienen hierbei als Lagerflächen für die Gelenkteile und ermöglichen für jedes der Gelenkteile zumindest eine Schwenkbewegung um eine Schwenkachse. Die derart ausgebildete Gelenkeinrichtung eignet sich besonders für eine schwenkbewegliche Lagerung eines ersten Bauteils gegenüber einem zweiten Bauteil um zwei zueinander senkrechte Achsen, wie sie beispielsweise bei aneinander angrenzenden Achsabschnitten eines Manipulators vorgesehen sein kann.

Die Ausnehmung im Gelenkteil ist für eine formschlüssige Verbindung des Gelenkteils mit dem Kopplungselement vorgesehen. Das Gelenkteil umfasst das Kopplungselement vollständig, wodurch eine besonders hohe Belastbarkeit der Gelenkeinrichtung in Hinblick auf Zugkräfte, die längs einer senkrecht zu den beiden Schwenkachsen verlaufenden Achse ausgerichtet sind, gewährleistet ist.

Vorteilhafte Weiterbildungen der Erfindung sind Gegenstand von Unteransprüchen.

Bei einer Weiterbildung der Erfindung ist vorgesehen, dass das Kopplungselement einstückig ausgebildet ist.

Bevorzugt sind einander gegenüberliegende Berührflächen der Führungsnuten am Kopplungselement und der jeweiligen Ausnehmung an den Gelenkteilen zumindest abschnittsweise kugelabschnittsförmig, insbesondere zylindrisch, ausgebildet. Hierdurch wird über den vorgesehenen Schwenkwinkelbereich eine möglichst großflächige und damit hochbelastbare Anlagefläche zwischen dem jeweiligen Gelenkteil und dem Kopplungselement gewährleistet. Bei einer kugelabschnittsförmigen Ausgestaltung der Berührflächen sind diese vorzugsweise als symmetrischer Abschnitt aus dem Äquatorialbereich einer Kugel ausgebildet. Dies ermöglicht zusätzlich zur Schwenkbeweglichkeit des Gelenkelements eine Verkippung des Gelenkelements zumindest in einem kleinen Kippwinkelbereich um die zweite, dem anderen Gelenkelement zugeordnete Schwenkachse. Hierdurch kann ein besonders geschmeidiges Verhalten der Gelenkeinrichtung bei der Übertragung von Schwenkbewegungen zwischen den Gelenkelementen erreicht werden. Besonders vorteilhaft ist es, wenn das Koppelelement genau zwei senkrecht zueinander ausgerichtete, kreisförmig umlaufende, insbesondere zylinderabschnittsförmige, Führungsnuten aufweist. Hierdurch kann eine besonders einfache und belastbare Aufbauweise für die Gelenkelemente und das Kopplungselement erreicht werden. Besonders bevorzugt ist vorgesehen, dass sich Symmetrieachsen der beiden Führungsnuten in einem Punkt schneiden, der einem gemeinsamen Zentrum beider Führungsnuten entspricht.

In Ausgestaltung der Erfindung ist vorgesehen, dass die Ausnehmung im Gelenkteil zwei kugelabschnittsförmige, vorzugsweise zylindrische, insbesondere koaxial zueinander ausgerichtete, aneinander angrenzende Ausnehmungsabschnitte mit unterschiedlichen Radien aufweist, wobei der erste Ausnehmungsabschnitt zur Aufnahme des Kopplungselements und der zweite Ausnehmungsabschnitt zur Aufnahme eines Abschnitts des zweiten Gelenkteils ausgebildet ist. Die beiden Ausnehmungsabschnitte ermöglichen neben der schwenkbeweglichen Aufnahme des Kopplungselements eine freie Schwenkbewegung des zweiten Gelenkteils gegenüber dem ersten Gelenkteil, insbesondere in einem vorgebbaren Schwenkwinkelbereich. Vorzugsweise ist der erste Ausnehmungsabschnitt im Wesentlichen in der Art eines Dreiviertelkreises ausgebildet und umfasst somit das Kopplungselement im Bereich der Führungsnut formschlüssig, insbesondere nahezu vollständig. Der zweite Ausnehmungsabschnitt ist vorzugweise als Viertelkreis mit einem gegenüber dem ersten Ausnehmungsabschnitt vergrößerten Radius ausgebildet und ermöglicht die Schwenkbewegung des: zweiten Gelenkelements gegenüber dem ersten Gelenkelement.

Vorteilhaft ist es, wenn seitliche Begrenzungsflächen des zweiten Ausnehmungsabschnitts eine Schwenkwinkelbegrenzung für das zweite Gelenkteil bilden. Dadurch wird sichergestellt, dass das zweite Gelenkteil bei Erreichen eines vorgebbaren maximalen Schwenkwinkels gegenüber den ersten Gelenkteil in eine ausreichend große flächige Anlage mit dem ersten Gelenkteil kommt. Hierdurch kann ein gegebenenfalls auf das zweite Gelenkteil einwirkendes Drehmoment um dessen Schwenkachse vorteilhaft abgestützt und eine Überbelastung des Kopplungselements und/oder des Gelenkelements vermieden werden.

Zweckmäßig ist es, wenn die Gelenkteile im Bereich des Kopplungselements plattenförmig, insbesondere laschenartig, ausgebildet sind, wobei Haupterstreckungsflächen der einander gegenüberliegenden Gelenkteile senkrecht zueinander ausgerichtet sind. Hierdurch ist eine besonders kompakte Gestaltung der Gelenkeinrichtung möglich. Vorzugsweise umgreifen die als geschlossene Laschen ausgebildeten Gelenkelemente ein im Wesentlichen kugelförmig ausgebildetes Kopplungselement, das jeweils im Bereich der Äquatorialebenen mit den senkrecht zu einander ausgerichteten, ringförmig umlaufenden Führungsnuten versehen ist.

Vorzugsweise sind die Gelenkteile und das Kopplungselement mit einem generativen Herstellungsverfahren, vorzugsweise mit selektivem Lasersintern, insbesondere in einem gemeinsamen Herstellungsprozess, aus Kunststoff oder Metall hergestellt. Hierdurch kann in vorteilhafter Weise eine einstückige Gestaltung der Gelenkelemente und des Kopplungselements erreicht werden, da diese Bauteile aus einer formlosen Masse, beispielsweise Kunststoffpulver oder Metallpulver, abgeschieden werden und dabei bereits in dem späteren Zusammenbauzustand angeordnet werden. Eine Montage der Gelenkelemente und des Kopplungselements ist aufgrund des generativen Herstellungsprozesses nicht notwendig, vielmehr sind die Gelenkelemente und das Kopplungselement am Ende des Herstellungsvorgangs bereits fertig montiert und, vorzugsweise unlösbar, schwenkbeweglich miteinander verbunden.

Eine vorteilhafte Ausführungsform der Erfindung ist in der Zeichnung dargestellt. Dabei zeigt:
- Figur 1: eine perspektivische Darstellung einer Gelenkeinrichtung in einer Neutralstellung,
- Figur 2: eine Schnittdarstellung der Gelenkeinrichtung,
- Figur 3: eine Seitenansicht der Gelenkeinrichtung,
- Figur 4: die Gelenkeinrichtung in einer Ansicht von unten und
- Figur 5: eine Schnittdarstellung der Gelenkeinrichtung.

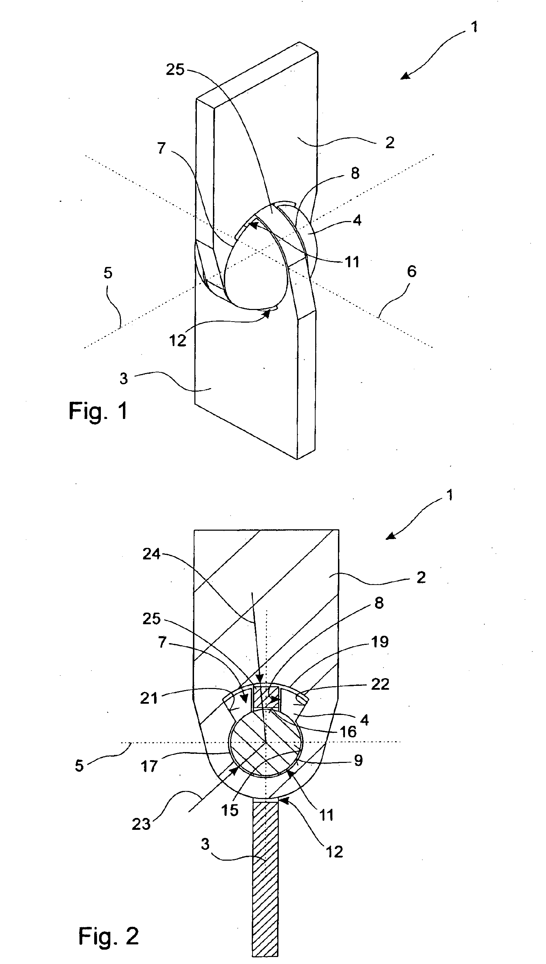

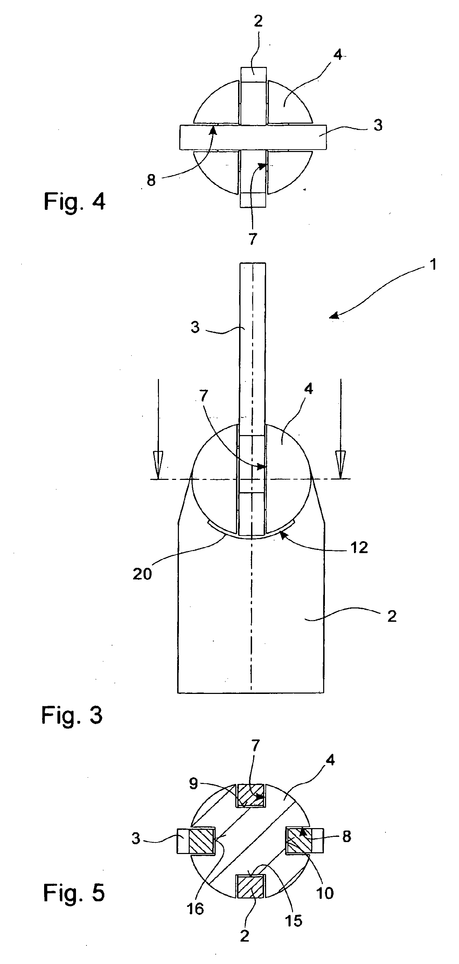

Eine in den Figuren 1 bis 5 dargestellte Ausführungsform einer Gelenkeinrichtung 1 umfasst ein erstes Gelenkteil 2 und ein zweites Gelenkteil 3. Beide Gelenkteile 2, 3 sind exemplarisch plattenförmig ausgebildet und stehen in formschlüssiger, schwenkbeweglicher Verbindung mit einem Kopplungselement 4. Jedes der beiden Gelenkteile 2, 3 ist derart an dem Kopplungselement 4 angeordnet, dass es in einem vorgebbaren Schwenkwinkelbereich um eine erste bzw. um eine zweite Schwenkachse 5, 6 verschwenkbar ist. Hierdurch weist die Gelenkeinrichtung 1 vergleichbare kinematische Eigenschaften wie ein Kardan oder Kreuzgelenk auf und ermöglicht eine Schwenkbewegung eines nicht dargestellten, an dem ersten Gelenkelement 2 angebrachten Bauteils gegenüber einem am zweiten Gelenkelement 3 angebrachten, ebenfalls nicht dargestellten Bauteil. Wie bei einem Kardan- oder Kreuzgelenk erlaubt die Gelenkeinrichtung 1 eine Drehmomentübertragung von Drehmomenten, die senkrecht zu den Schwenkachsen 5, 6 ausgerichtet sind, zwischen den Gelenkteilen 2, 3.

Jedes der Gelenkteile 2, 3 ist am Kopplungselement 4 in einer exemplarisch ringförmig ausgebildeten ersten bzw. zweiten Führungsnut 7, 8 aufgenommen, wobei die Gelenkteile 2, 3 mit dem Kopplungselement 4 jeweils Gleitlager bilden.

Die Führungsnut 7, 8 wird in einem radial innenliegenden Bereich, der auch als Nutgrund bezeichnet werden kann, jeweils von einer beispielhaft im Wesentlichen zylindrisch ausgeführten Berührfläche 9, 10 begrenzt. Den Führungsnuten 7, 8 sind entsprechende, jeweils in den Gelenkteilen 2, 3 ausgeführte erste bzw. zweite Ausnehmungen 11, 12 zugeordnet, in denen jeweils das Kopplungselement 4 aufgenommen ist. Die Ausnehmungen 11, 12 werden im Wesentlichen von radial nach innen weisenden ersten bzw. zweiten Lagerflächen 15, 16 begrenzt, die an die Geometrie der Berührflächen 9, 10 angepasst sind.

Die Berührflächen 9, 10 des Kopplungselements 4 können auch als Oberflächen von senkrecht zueinander ausgerichteten Gelenkzapfen angesehen werden. Aufgrund der vorliegenden Ausführung der Gelenkteile 2, 3 als geschlossene Laschen werden die Berührflächen 9, 10 des Kopplungselements 4 von den Gelenkteilen 2, 3 nahezu vollständig umgriffen. Somit ist eine formschlüssige Verbindung zwischen den Gelenkteilen 2, 3 und dem Kopplungselement 4 gewährleistet.

Die in den Gelenkteilen 2, 3 ausgebildeten Ausnehmungen 11, 12 weisen jeweils einen ersten vorzugsweise zylinderabschnittsförmigen Ausnehmungsabschnitt 17 und einen zweiten, vorzugsweise ebenfalls zylinderabschnittsförmigen Ausnehmungsabschnitt 19, 20 auf. Bei den vorliegenden Figuren 1 bis 5 sind beim ersten Gelenkteil 2 die Ausnehmungsabschnitte 17, 19 zu sehen, während beim zweiten Gelenkteil 3 nur der Ausnehmungsabschnitt 20 sichtbar ist. Der erste Ausnehmungsabschnitt 17 wird vorliegend von der ersten Lagerfläche 15 begrenzt und weist einen ersten Radius 23 auf. Der zweite Ausnehmungsabschnitt 19 20 ist exemplarisch konzentrisch zum ersten Ausnehmungsabschnitt 17 angeordnet und in der Art eines Kreissegments ausgebildet und weist einen zweiten Radius 24 auf, der größer als der erste Radius 23 gewählt ist. Der zweite Ausnehmungsabschnitt 19 stellt beispielsweise einen Bewegungsraum für den vorderen, ringabschnittsförmigen Bereich 25 des Gelenkelements 3 bereit, mit dem jeweils das Kopplungselement 4 umgriffen wird. Die Größe des zweiten Ausnehmungsabschnitts 19 bestimmt die Schwenkbeweglichkeit des Gelenkelementes 3 relativ zum Gelenkelement 2. Hierzu sind jeweils seitlich an dem zweiten Ausnehmungsabschnitt 19 ausgebildete und exemplarisch in radialer Richtung ausgerichtete Begrenzungsflächen 21, 22 vorgesehen, die als Anschlagflächen in der Art einer Schwenkwinkelbegrenzung für das jeweils andere Gelenkteil 2, 3 dienen.

Das Kopplungselement 4 hat eine im Wesentlichen kugelförmige Gestalt, die durch die beiden in senkrecht zueinander ausgerichteten Ebenen ausgebildeten Führungsnuten 7, 8 mitbestimmt wird. Für die Funktion des Kopplungselements 4 ist es von Bedeutung, dass die Bereiche abseits der Führungsnuten 7, 8 in radialer Richtung nach außen erstreckt ausgebildet sind, um eine seitliche Führung der jeweiligen Gelenkteile in Richtung der jeweiligen Schwenkachse 5, 6 zu gewährleisten. Diese radial nach außen erstreckten Bereiche müssen nicht kugelabschnittsförmig sein, sie können auch eine andere Gestalt aufweisen. Vorzugsweise wird durch die äußere Gestalt des Kopplungselements 4 die relative Beweglichkeit der Gelenkteile 2, 3 zueinander nicht eingeschränkt.

## Patentansprüche

1. Gelenkeinrichtung zur schwenkbeweglichen Verbindung benachbarter Bauteile, mit einem ersten Gelenkteil (2) und einem Bauteil, das einstückig am Gelenkteil (2) angeformt ist und mit einem zweiten Gelenkteil (3) und einem Bauteil, das einstückig am Gelenkteil (3), angeformt ist sowie mit einem Kopplungselement (4), das mit beiden Gelenkteilen (2, 3) jeweils derart schwenkbeweglich verbunden ist, wobei eine Schwenkachse (5) des ersten Gelenkteils (2) senkrecht zu einer Schwenkachse (6) des zweiten Gelenkteils (3) ausgerichtet ist, wobei das Kopplungselement (4) zwei in senkrecht zueinander ausgerichteten Ebenen ausgebildete, ringförmig umlaufende Führungsnuten (7, 8) aufweist, die jeweils für einen Eingriff eines Gelenkteils (2, 3) ausgebildet sind, wobei das Gelenkteil (2, 3) einstückig ausgebildet ist, **dadurch gekennzeichnet, dass** die Gelenkteile (2, 3) jeweils eine an die Führungsnut (7, 8) angepasste Ausnehmung (11, 12) aufweisen, die derart ausgebildet ist, dass das jeweilige Gelenkteil (2, 3) das Kopplungselement (4) im Bereich der Führungsnut (7, 8) vollständig umgreift.

2. Gelenkeinrichtung nach Anspruch 1, **dadurch gekennzeichnet, dass** das Kopplungselement (4) einstückig ausgebildet ist.

3. Gelenkeinrichtung nach Anspruch 1 oder 2, **dadurch gekennzeichnet, dass** einander gegenüberliegende Berührflächen (9, 10) der Führungsnuten (7, 8) am Kopplungselement (4) und der jeweiligen Ausnehmung (11, 12) an den Gelenkteilen (2, 3) zumindest abschnittsweise kugelabschnittsförmig, insbesondere zylindrisch, ausgebildet sind.

4. Gelenkeinrichtung nach einem der vorhergehenden Ansprüche, **dadurch gekennzeichnet, dass** das Koppelelement (4) genau zwei senkrecht zueinander ausgerichtete, kreisförmig umlaufende, insbesondere zylinderabschnittsförmige, Führungsnuten (7, 8) aufweist.

5. Gelenkeinrichtung nach einem der vorhergehenden Ansprüche, **dadurch gekennzeichnet, dass** die Ausnehmung (11, 12) im Gelenkteil (2, 3) zwei kugelabschnittsförmige, vorzugsweise zylindrische, insbesondere koaxial zueinander ausgerichtete, aneinander angrenzende Ausnehmungsabschnitte (17, 19, 20) mit unterschiedlichen Radien aufweist, wobei der erste Ausnehmungsabschnitt (17) zur Aufnahme des Kopplungselements (4) und der zweite Ausnehmungsabschnitt (19, 20) zur Aufnahme eines Abschnitts des zweiten Gelenkteils (2, 3) ausgebildet ist.

6. Gelenkeinrichtung nach Anspruch 5, **dadurch gekennzeichnet, dass** seitliche Begrenzungsflächen (21, 22) des zweiten Ausnehmungsabschnitts (19, 20) eine Schwenkwinkelbegrenzung für das zweite Gelenkteil (2, 3) bilden.

7. Gelenkeinrichtung nach einem der vorhergehenden Ansprüche, **dadurch gekennzeichnet, dass** die Gelenkteile (2, 3) im Bereich des Kopplungselements (4) plattenförmig, insbesondere laschenartig, ausgebildet sind, wobei Haupterstreckungsflächen der einander gegenüberliegenden Gelenkteile (2, 3) senkrecht zueinander ausgerichtet sind.

8. Gelenkeinrichtung nach einem der vorhergehenden Ansprüche, **dadurch gekennzeichnet, dass** die Gelenkteile (2, 3) und das Kopplungselement (4) mit einem generativen Herstellungsverfahren, vorzugsweise mit selektivem Lasersintern, insbesondere in einem gemeinsamen Herstellungsprozess, aus Kunststoff oder Metall hergestellt sind.

## Claims

1. Joint device for swivelling connection of adjacent components, with a first joint part (2) and a component which is moulded on to the joint part (2) in one piece, and with a second joint part (3) and a component which is moulded on to the joint part (3) in one piece, also with a coupling element (4) which is connected to both joint parts (2, 3) with swivelling movement capability , wherein a swivel axis (5) of the first joint part (2) is aligned perpendicular to a swivel axis (6) of the second joint part (3), wherein the coupling element (4) has two annular continuous guide slots (7, 8) formed in planes aligned perpendicular to one another and each designed for engagement of a joint part (2, 3), wherein the joint part (2, 3) is made in one piece, **characterised in that** each of the joint parts (2, 3) has a recess (11, 12) matched to the guide slot (7, 8) and so designed that the respective joint part (2, 3) fully encompasses the coupling element (4) in the area of the guide slot (7, 8).

2. Joint device according to claim 1, **characterised in that** the coupling element (4) is made in one piece.

3. Joint device according to claim 1 or 2, **characterised in that** opposing contact faces (9, 10) of the guide slots (7, 8) on the coupling element (4) and the respective recess (11, 12) on the joint part (2, 3) are spherical-section-shaped, in particular cylindrical, in certain sections.

4. Joint device according to any of the preceding claims. **characterised in that** the coupling element (4) has precisely two circular continuous guide slots (7, 8), in particular cylindrical-section-shaped, aligned perpendicular to one another.

5. Joint device according to any of the preceding claims, **characterised in that** the recess (11, 12) in the joint part (2, 3) has two spherical-section-shaped, preferably cylindrical, recess sections (17, 19, 20) with different radii, adjacent to and in particular aligned coaxial to one another, wherein the first recess section (17) is designed to hold the coupling element (4) and the second recess section (19, 20) is designed to hold a section of the second joint part (2, 3).

6. Joint device according to claim 5, **characterised in that** the side limit faces (21, 22) of the second recess section (19, 20) form a swivel angle limit for the second joint part (2, 3).

7. Joint device according to any of the preceding claims, **characterised in that** the joint parts (2, 3) in the area of the coupling element (4) are plate-shaped, in particular tab-like, wherein main extension faces of the opposing joint parts (2, 3) are aligned perpendicular to one another.

8. Joint device according to any of the preceding claims, **characterised in that** the joint parts (2, 3) and the coupling element (4) are made from plastic or metal in a generative production process, preferably with selective laser sintering, in particular in a common production process.

## Revendications

1. Dispositif d'articulation servant à relier de manière mobile par pivotement des composants adjacents, comprenant une première partie d'articulation (2) et un composant, qui est formé d'un seul tenant au niveau de la partie d'articulation (2), et comprenant une deuxième partie d'articulation (3) et un composant, qui est formé d'un seul tenant au niveau de la partie d'articulation (3), et comprenant également un élément de couplage (4), qui est relié de manière mobile par pivotement aux deux parties d'articulation (2, 3) respectivement, sachant qu'un axe de pivotement (5) de la première partie d'articulation (2) est orienté de manière perpendiculaire par rapport à un axe de pivotement (6) de la deuxième partie d'articulation (3), sachant que l'élément de couplage (4) présente deux rainures de guidage (7, 8) réalisées dans des plans orientés de manière perpendiculaire les uns par rapport aux autres, périphériques de manière à présenter une forme annulaire, lesquelles sont réalisées respectivement en vue d'une prise d'une partie d'articulation (2, 3), sachant que la partie d'articulation (2, 3) est réalisée d'un seul tenant, **caractérisé en ce que** les parties d'articulation (2, 3) présentent respectivement un évidement (11, 12) adapté à la rainure de guidage (7, 8), qui est réalisé de telle manière que la partie d'articulation (2, 3) respective entoure complètement l'élément de couplage (4) dans la zone de la rainure de guidage (7, 8).

2. Dispositif d'articulation selon la revendication 1, **caractérisé en ce que** l'élément de couplage (4) est réalisé d'un seul tenant.

3. Dispositif d'articulation selon la revendication 1 ou 2, **caractérisé en ce que** des surfaces de contact (9, 10) se faisant face les unes les autres des rainures de guidage (7, 8) au niveau de l'élément de couplage (4) et au niveau de l'évidement (11, 12) respectif sont réalisées au niveau des parties d'articulation (2, 3) au moins par endroits de manière à présenter une forme de section sphérique, en particulier de manière à présenter une forme cylindrique.

4. Dispositif d'articulation selon l'une quelconque des revendications précédentes, **caractérisé en ce que** l'élément de couplage (4) présente précisément deux rainures de guidage (7, 8) orientées de manière perpendiculaire l'une par rapport à l'autre, périphériques de manière à présenter une forme circulaire, en particulier présentant une forme de section cylindrique.

5. Dispositif d'articulation selon l'une quelconque des revendications précédentes, **caractérisé en ce que** l'évidement (11, 12) dans la partie d'articulation (2, 3) présente deux sections d'évidement (17, 19, 20) présentant une forme de section sphérique, de préférence cylindriques, en particulier orientées de manière coaxiale l'une par rapport à l'autre, se jouxtant, pourvues de rayons différents, sachant que la première section d'évidement (17) est réalisée afin de recevoir l'élément de couplage (4) et que la deuxième section d'évidement (19, 20) est réalisée afin de recevoir une section de la deuxième partie d'articulation (2, 3).

6. Dispositif d'articulation selon la revendication 5, **caractérisé en ce que** des surfaces de délimitation (21, 22) latérales de la deuxième section d'évidement (19, 20) forment une délimitation d'angle de pivotement pour la deuxième partie d'articulation (2, 3).

7. Dispositif d'articulation selon l'une quelconque des revendications précédentes, **caractérisé en ce que** les parties d'articulation (2, 3) sont réalisées dans la zone de l'élément de couplage (4) de manière à présenter une forme de plaque, en particulier à la manière d'une bride, sachant que des surfaces d'extension principales des parties d'articulation (2, 3) se faisant face les unes par rapport aux autres sont orientées de manière perpendiculaire les unes par rapport aux autres.

8. Dispositif d'articulation selon l'une quelconque des revendications précédentes, **caractérisé en ce que** les parties d'articulation (2, 3) et l'élément de couplage (4) sont fabriqués à partir d'une matière plastique ou d'un métal à l'aide d'un procédé de fabrication génératif, de préférence à l'aide d'un frittage au laser sélectif, en particulier lors d'un procédé de fabrication commun.
